(19)

Europäisches
Patentamt
European
Patent Office
Office européen
des brevets

(11) **EP 4 553 807 A1**

(12) **EUROPEAN PATENT APPLICATION**

(43) Date of publication:
**14.05.2025 Bulletin 2025/20**

(21) Application number: **24212095.4**

(22) Date of filing: **11.11.2024**

(51) International Patent Classification (IPC):
**G08G 1/01** (2006.01)    **G08G 1/081** (2006.01)
**G08G 1/123** (2006.01)    **G08G 1/00** (2006.01)

(52) Cooperative Patent Classification (CPC):
**G08G 1/0145; G06Q 10/063; G06Q 50/40;**
**G08G 1/096783; G08G 1/123; G08G 1/22**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.11.2023 FI 20236257**

(71) Applicant: **Nokia Solutions and Networks Oy**
**02610 Espoo (FI)**

(72) Inventors:
- **USCUMLIC, Bogdan**
  **Orsay (FR)**
- **ENRICI, Andrea**
  **Bourg la Reine (FR)**
- **NATARIANNI, Lionel**
  **Nogent-Sur-Marne (FR)**

(74) Representative: **Nokia EPO representatives**
**Nokia Technologies Oy**
**Karakaari 7**
**02610 Espoo (FI)**

(54) **TRAFFIC SCHEDULING FOR INTELLIGENT TRANSPORTATION SYSTEM**

(57) A method comprising: receiving scheduling information for dynamic road portions reserved for vehicle trains in a road network including a set of roads and a set of intersections between roads in the set of roads, wherein all vehicles in all vehicle trains are moving with the same speed;wherein respective vehicle train scheduling cycles are assigned to roads in the set of roads, wherein each of the vehicle train scheduling cycles includes a same number of time slots and repeats over time; wherein the dynamic road portions are reserved such that at least one time slot in a vehicle train scheduling cycle assigned to a road on a path corresponding to a traffic demand is allocated to the considered path, wherein a time slot allocated in a vehicle train scheduling cycle assigned to a road defines a sliding spatial window moving over the considered road at the speed of a vehicle train and corresponds at each time to a road portion reserved on the considered road for a vehicle train to move on the considered path.

FIG. 6

EP 4 553 807 A1

**Description**

TECHNICAL FIELD

Various example embodiments relate generally to apparatuses and methods for traffic scheduling that is adapted for Intelligent Transportation System, ITS.

BACKGROUND

Connected car corridors are dedicated lanes in road networks that are reserved for autonomous cars that are registered to an Intelligent Transportation System (ITS) service.

An ITS raises various traffic control issues. Vehicles coming from different roads can experience a delay or a collision at road crossing. It is desirable to provide a traffic control solution for avoiding such collisions and / or delays.

SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

According to a first aspect, a method comprises: obtaining a mesh topology representing a road network including a set of roads and a set of intersections between roads in the set of roads; obtaining traffic demands corresponding respectively to paths in a set of paths, wherein each path is from a source to a destination in the set of roads; assigning respective vehicle train scheduling cycles to roads in the set of roads, wherein each of the vehicle train scheduling cycles includes a same number of time slots and repeats over time; scheduling traffic on the plurality of roads by reserving respective dynamic road portions for vehicle trains on the basis of the traffic demands and the mesh topology, wherein all vehicles in all vehicle trains are moving with the same speed; wherein reserving dynamic road portions for vehicle trains comprises: allocating, to each road on a path corresponding to a traffic demand, at least one time slot in a vehicle train scheduling cycle assigned to the considered road, wherein a time slot allocated in a vehicle train scheduling cycle assigned to a road defines a sliding spatial window moving over the considered road at the speed of a vehicle train and corresponds at each time to a road portion reserved on the considered road for a vehicle train to move on the considered path.

The method may comprise: sending, to one or more vehicles in one or more vehicle trains, scheduling information on reserved dynamic road portions.

The method may comprise: receiving at least one traffic demand corresponding respectively to a journey by a source and destination, wherein sending the scheduling information is performed in response to receiving at least one traffic demand corresponding respectively to a journey by a source and destination.

The scheduling information may include at least one of time availabilities and coordinates of reserved dynamic road portions.

The method may comprise: monitoring a congestion level based on traffic demands; determining when to update the scheduling of the traffic on the plurality of roads based on the congestion level.

The method may comprise: updating the scheduling of the traffic on the plurality of roads to generate updated scheduling information on road portions allocated to vehicle trains; sending, to one or more vehicles in one or more vehicle trains, the updated scheduling information.

Reserving dynamic road portions may comprise: allocating, for at least one road, at least one time slot in a vehicle train scheduling cycle assigned to the considered road for vehicles that may join the considered road.

Reserving dynamic road portions may be performed such that, for each of the roads on a path corresponding to a traffic demand, the same time slot is allocated in the vehicle train scheduling cycle assigned to the concerned road.

The vehicle train scheduling cycles assigned to the roads joining or leaving a same intersection may be temporally aligned at time slot level at a given point of the intersection.

Reserving dynamic road portions may be performed such that the one or more road portions allocated for a road represent a traffic capacity that is above a traffic demand for the considered road.

According to a second aspect, a method comprises: receiving scheduling information for dynamic road portions reserved for vehicle trains in a road network including a set of roads and a set of intersections between roads in the set of roads, wherein all vehicles in all vehicle trains are moving with the same speed; wherein respective vehicle train scheduling cycles are assigned to roads in the set of roads, wherein each of the vehicle train scheduling cycles includes a same number of time slots and repeats over time; wherein the dynamic road portions are reserved such that at least one time slot in a vehicle train scheduling cycle assigned to a road on a path corresponding to a traffic demand is allocated to the considered path, wherein a time slot allocated in a vehicle train scheduling cycle assigned to a road defines a sliding spatial window moving over the considered road at the speed of a vehicle train and corresponds at each time to a road portion reserved on the considered road for a vehicle train to move on the considered path.

The method may comprise: sending the scheduling information to one or more vehicles that are not in a vehicle train among the vehicle trains.

The method may comprise: calculating, based on the scheduling information, one or more distances to a reserved road portion and/or waiting time to join an existing vehicle train in a reserve road portion.

The scheduling information may include at least one of time availabilities and coordinates of reserved dynamic road portions.

According to another aspect, an apparatus comprises means for: obtaining a mesh topology representing a road network including a set of roads and a set of intersections between roads in the set of roads; obtaining traffic demands corresponding respectively to paths in a set of paths, wherein each path is from a source to a destination in the set of roads; assigning respective vehicle train scheduling cycles to roads in the set of roads, wherein each of the vehicle train scheduling cycles includes a same number of time slots and repeats over time; scheduling traffic on the plurality of roads by reserving respective dynamic road portions for vehicle trains on the basis of the traffic demands and the mesh topology, wherein all vehicles in all vehicle trains are moving with the same speed; wherein reserving dynamic road portions for vehicle trains comprises: allocating, to each road on a path corresponding to a traffic demand, at least one time slot in a vehicle train scheduling cycle assigned to the considered road, wherein a time slot allocated in a vehicle train scheduling cycle assigned to a road defines a sliding spatial window moving over the considered road at the speed of a vehicle train and corresponds at each time to a road portion reserved on the considered road for a vehicle train to move on the considered path.

The apparatus may comprise means for performing one or more or all steps of the method according to the first aspect. The means may include at least one processor and at least one memory storing instructions that, when executed by the at least one processor, cause the apparatus to perform one or more or all steps of a method according to the first aspect. The means may include circuitry (e.g. processing circuitry) to perform one or more or all steps of a method according to the first aspect.

According to another aspect, an apparatus comprises at least one processor and at least one memory storing instructions that, when executed by the at least one processor, cause the apparatus to perform: obtaining a mesh topology representing a road network including a set of roads and a set of intersections between roads in the set of roads; obtaining traffic demands corresponding respectively to paths in a set of paths, wherein each path is from a source to a destination in the set of roads; assigning respective vehicle train scheduling cycles to roads in the set of roads, wherein each of the vehicle train scheduling cycles includes a same number of time slots and repeats over time; scheduling traffic on the plurality of roads by reserving respective dynamic road portions for vehicle trains on the basis of the traffic demands and the mesh topology, wherein all vehicles in all vehicle trains are moving with the same speed; wherein reserving dynamic road portions for vehicle trains comprises: allocating, to each road on a path corresponding to a traffic demand, at least one time slot in a vehicle train scheduling cycle assigned to the considered road, wherein a time slot allocated in a vehicle train scheduling cycle assigned to a road defines a sliding spatial window moving over the considered road at the speed of a vehicle train and corresponds at each time to a road portion reserved on the considered road for a vehicle train to move on the considered path.

The instructions, when executed by the at least one processor, may cause the apparatus to perform one or more or all steps of a method according to the first aspect.

According to another aspect, a computer program comprises instructions that, when executed by an apparatus, cause the apparatus to perform: obtaining a mesh topology representing a road network including a set of roads and a set of intersections between roads in the set of roads; obtaining traffic demands corresponding respectively to paths in a set of paths, wherein each path is from a source to a destination in the set of roads; assigning respective vehicle train scheduling cycles to roads in the set of roads, wherein each of the vehicle train scheduling cycles includes a same number of time slots and repeats over time; scheduling traffic on the plurality of roads by reserving respective dynamic road portions for vehicle trains on the basis of the traffic demands and the mesh topology, wherein all vehicles in all vehicle trains are moving with the same speed; wherein reserving dynamic road portions for vehicle trains comprises: allocating, to each road on a path corresponding to a traffic demand, at least one time slot in a vehicle train scheduling cycle assigned to the considered road, wherein a time slot allocated in a vehicle train scheduling cycle assigned to a road defines a sliding spatial window moving over the considered road at the speed of a vehicle train and corresponds at each time to a road portion reserved on the considered road for a vehicle train to move on the considered path.

The instructions may cause the apparatus to perform one or more or all steps of a method according to the first aspect.

According to another aspect, a non-transitory computer readable medium comprises program instructions stored thereon for causing an apparatus to perform at least the following: obtaining a mesh topology representing a road network including a set of roads and a set of intersections between roads in the set of roads; obtaining traffic demands corresponding respectively to paths in a set of paths, wherein each path is from a source to a destination in the set of roads;

assigning respective vehicle train scheduling cycles to roads in the set of roads, wherein each of the vehicle train scheduling cycles includes a same number of time slots and repeats over time; scheduling traffic on the plurality of roads by reserving respective dynamic road portions for vehicle trains on the basis of the traffic demands and the mesh topology, wherein all vehicles in all vehicle trains are moving with the same speed; wherein reserving dynamic road portions for vehicle trains comprises: allocating, to each road on a path corresponding to a traffic demand, at least one time slot in a vehicle train scheduling cycle assigned to the considered road, wherein a time slot allocated in a vehicle train scheduling cycle assigned to a road defines a sliding spatial window moving over the considered road at the speed of a vehicle train and corresponds at each time to a road portion reserved on the considered road for a vehicle train to move on the considered path.

The program instructions may cause the apparatus to perform one or more or all steps of a method according to the first aspect.

According to another aspect, an apparatus comprises means for: receiving scheduling information for dynamic road portions reserved for vehicle trains in a road network including a set of roads and a set of intersections between roads in the set of roads, wherein all vehicles in all vehicle trains are moving with the same speed; wherein respective vehicle train scheduling cycles are assigned to roads in the set of roads, wherein each of the vehicle train scheduling cycles includes a same number of time slots and repeats over time; wherein the dynamic road portions are reserved such that at least one time slot in a vehicle train scheduling cycle assigned to a road on a path corresponding to a traffic demand is allocated to the considered path, wherein a time slot allocated in a vehicle train scheduling cycle assigned to a road defines a sliding spatial window moving over the considered road at the speed of a vehicle train and corresponds at each time to a road portion reserved on the considered road for a vehicle train to move on the considered path.

The apparatus may comprise means for performing one or more or all steps of the method according to the second aspect. The means may include at least one processor and at least one memory storing instructions that, when executed by the at least one processor, cause the apparatus to perform one or more or all steps of a method according to the second aspect. The means may include circuitry (e.g. processing circuitry) to perform one or more or all steps of a method according to the second aspect.

According to another aspect, an apparatus comprises at least one processor and at least one memory storing instructions that, when executed by the at least one processor, cause the apparatus to perform: receiving scheduling information for dynamic road portions reserved for vehicle trains in a road network including a set of roads and a set of intersections between roads in the set of roads, wherein all vehicles in all vehicle trains are moving with the same speed; wherein respective vehicle train scheduling cycles are assigned to roads in the set of roads, wherein each of the vehicle train scheduling cycles includes a same number of time slots and repeats over time; wherein the dynamic road portions are reserved such that at least one time slot in a vehicle train scheduling cycle assigned to a road on a path corresponding to a traffic demand is allocated to the considered path, wherein a time slot allocated in a vehicle train scheduling cycle assigned to a road defines a sliding spatial window moving over the considered road at the speed of a vehicle train and corresponds at each time to a road portion reserved on the considered road for a vehicle train to move on the considered path.

The instructions, when executed by the at least one processor, may cause the apparatus to perform one or more or all steps of a method according to the second aspect.

According to another aspect, a computer program comprises instructions that, when executed by an apparatus, cause the apparatus to perform: receiving scheduling information for dynamic road portions reserved for vehicle trains in a road network including a set of roads and a set of intersections between roads in the set of roads, wherein all vehicles in all vehicle trains are moving with the same speed; wherein respective vehicle train scheduling cycles are assigned to roads in the set of roads, wherein each of the vehicle train scheduling cycles includes a same number of time slots and repeats over time; wherein the dynamic road portions are reserved such that at least one time slot in a vehicle train scheduling cycle assigned to a road on a path corresponding to a traffic demand is allocated to the considered path, wherein a time slot allocated in a vehicle train scheduling cycle assigned to a road defines a sliding spatial window moving over the considered road at the speed of a vehicle train and corresponds at each time to a road portion reserved on the considered road for a vehicle train to move on the considered path.

The instructions may cause the apparatus to perform one or more or all steps of a method according to the second aspect.

According to another aspect, a non-transitory computer readable medium comprises program instructions stored thereon for causing an apparatus to perform at least the following: receiving scheduling information for dynamic road portions reserved for vehicle trains in a road network including a set of roads and a set of intersections between roads in the set of roads, wherein all vehicles in all vehicle trains are moving with the same speed; wherein respective vehicle train scheduling cycles are assigned to roads in the set of roads, wherein each of the vehicle train scheduling cycles includes a same number of time slots and repeats over time; wherein the dynamic road portions are reserved such that at least one time slot in a vehicle train scheduling cycle assigned to a road on a path corresponding to a traffic demand is allocated to the considered path, wherein a time slot allocated in a vehicle train scheduling cycle assigned to a road defines a sliding spatial window moving over the considered road at the speed of a vehicle train and corresponds at each time to a road portion reserved on the considered road for a vehicle train to move on the considered path.

The program instructions may cause the apparatus to perform one or more or all steps of a method according to the second aspect.

BRIEF DESCRIPTION OF THE DRAWINGS

Example embodiments will become more fully understood from the detailed description given herein below and the accompanying drawings, which are given by way of illustration only and thus are not limiting of this disclosure.

FIG. 1 is a schematic diagram illustrating a communication system adapted for ITS according to an example.
FIG. 2 shows a simplified block diagram of a communication system adapted for an ITS.
FIG. 3 shows a flowchart of a method for vehicle insertion in a vehicle train according to one or more example embodiments.
FIG. 4 shows a flowchart of a method for leaving a vehicle train according to one or more example embodiments.
FIGS. 5A to 5D illustrate changes in vehicle trains according to an example.
FIG. 6 is a diagram showing a simplified road network.
FIG. 7 illustrates aspects of the scheduling based on scheduling cycles and time slots for a simplified example.
FIG. 8 is a diagram illustrating scheduling results according to a simplified example.
FIG. 9 is a schematic diagram illustrating a communication system adapted for ITS according to an example.
FIG. 10 shows a flowchart of a method for generating scheduling results according to one or more example embodiments.
FIG. 11 shows a flowchart of a method for broadcasting scheduling information according to one or more example embodiments.
FIG. 12 shows a flowchart of a method for processing scheduling information according to one or more example embodiments.
FIG. 13 shows a flowchart of a method for generating scheduling results according to one or more example embodiments.
FIG. 14 shows a flowchart of a method for using scheduling information according to one or more example embodiments.
FIG. 15 is a block diagram illustrating an exemplary hardware structure of an apparatus according to an example.

It should be noted that these drawings are intended to illustrate various aspects of devices, methods and structures used in example embodiments described herein. The use of similar or identical reference numbers in the various drawings is intended to indicate the presence of a similar or identical element or feature.

DETAILED DESCRIPTION

Detailed example embodiments are disclosed herein. However, specific structural and/or functional details disclosed herein are merely representative for purposes of describing example embodiments and providing a clear understanding of the underlying principles. However these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

One or more example embodiments describe devices and method for traffic scheduling that is adapted for an Intelligent Transportation System, ITS.

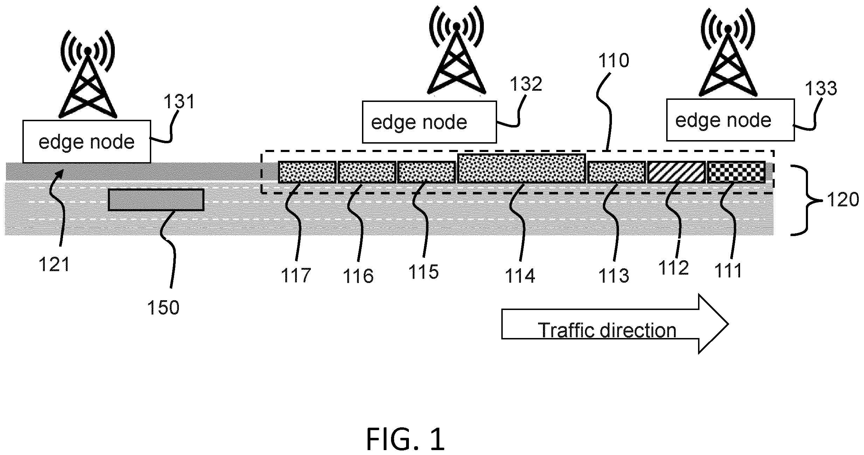

FIG. 1 is a schematic diagram illustrating a communication system adapted for ITS according to an example.

An ITS allows wireless communication between vehicles 111 to 117 (e.g. on-board devices) and a roadside infrastructure (e.g. ITS nodes). The roadside (e.g. fixed) infrastructure may include one or more edge nodes 131 to 133 (also referred to herein as the "control nodes") that collect traffic information from one or more vehicles (e.g. from on-board devices) on the roads and / or provides (e.g. broadcasts) traffic information to one or more vehicles (to on-board devices). Each vehicle (with its on-board device) forms a node in the system. The edge nodes may be fixed nodes while the vehicles may be mobile nodes.

In one or more embodiments, vehicle traffic is controlled on the basis of "vehicle trains". In FIG. 1, only one vehicle train 110 is represented. A vehicle train (also referred to herein as a vehicle group or vehicle burst) regroup a certain number of vehicles that moves on a reserved lane 121 of a road 120 (e.g. highway with several lanes) at the same speed (zero or non-zero speed) and in the same direction.

The first vehicle 111 in the vehicle train 110 (first vehicle in the moving direction of the train) is referred to herein as the "train leader" 111. The second vehicle 112 in the vehicle train is referred to herein as the "train follower" 112. The other vehicles in the vehicle train are referred to herein as the "train members" 113 to 117. Other vehicles (e.g. the vehicle 150 in FIG. 1) that do not belong to a vehicle train on a reserved lane are referred to herein as the "candidate vehicles" because each of these vehicles may join one of the vehicle trains.

The train leader may be responsible for signalisation of the train arrival or more generally for providing train information concerning its vehicle train. The train leader may send train information concerning its vehicle train to any node in the system, for example to an edge node of the roadside infrastructure and / or to an on-board device of a vehicle that is in the same or another vehicle train. Further this device may inform another on-board device of another vehicle (e.g. a vehicle that is not yet in a vehicle train) that wants to join to an existing vehicle train on a reserved lane.

A vehicle wanting to join a reserved lane may also become a train leader of a new vehicle train to be created, or a train leader of a vehicle train that is to be added at the end of an already existing vehicle train.

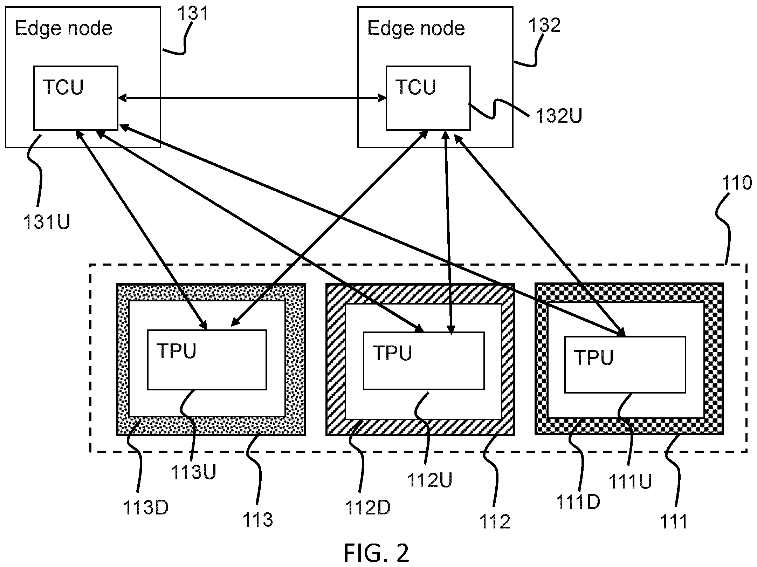

FIG. 2 shows a simplified block diagram of a communication system adapted for an ITS.

The communication system includes edge nodes 131, 132 and a vehicle train 110 including in this non limiting example three vehicles: a training leader 111, a train follower 112 and a train member 113. Each vehicle in the vehicle train 110 includes a respective on-board device 111D, 112D, 113D adapted to communicate with any of the edges nodes 131, 132.

Each edge node 131 to 133 may include a transceiver for wirelessly sending/receiving data to/from another edge node and / or one or more on-board devices. Each on-board device may include a transceiver for wirelessly sending/receiving data to/from one or more edge node and / or one or more on-board devices. Further one or more edge nodes may be interconnected by additional communication links, e.g. optical fiber links.

Control information, traffic information and data exchanged between edge nodes and on-board devices may include:

- Vehicle-to-Edge data: telemetry data like vehicle current position, current speed, current acceleration;
- Edge-to-Vehicle data: control signals to assist vehicle navigation (e.g., anticipate road congestion ahead);
- Edge-to-Edge data: data related to the variation of vehicles positions, speed, acceleration, etc.

To be able to manage vehicle trains, one or more edge nodes of the roadside infrastructure may be configured with a Train Control Unit, TCU 131U, 132U. A TCU may be configured perform functions for controlling the vehicle trains. A TCU may be configured to detect a vehicle train arrival, to measure the size and speed of the vehicle train, to broadcast the train access information to one or more vehicles that would like to join to this train. A TCU may be configured to store all train related information and / or centralize the processing of all train related information.

On vehicle side, an on-board device may be equipped with a Train Processing Unit, TPU, 111U, 112U, 113U. Functions of a TPU 111U, 112U, 113U include processing, storage, reception and transmission of train related information. This TPU 111U, 112U, 113U may be activated once a vehicle has joined a vehicle train and / or be deactivated once a vehicle has left a vehicle train.

A specific function of TPU 111U of a train leader may be to send (e.g. broadcast) the coordinates (e.g. GPS coordinates) of the vehicle train to the neighbouring TCU(s) and to receive and store the information about the size and/or the speed of the vehicle train.

A specific function of TPU 112U of a train follower may be to receive and store the information about the size and/or the speed of the vehicle train. Furthermore, the train follower may become the train leader if the current train leader fails or if the train leader leaves the reserved lane.

The role of train leader (or train follower) may be assigned to a vehicle by a traffic orchestrator on the basis of various parameters, e.g. vehicle positions.

A TPU 111U of a train leader may be configured, to:

- broadcast a signal BROAD_A indicating that a new train has been formed with this vehicle as a train leader; and / or
- broadcast a signal BROAD_B indicating the train arrival to a neighbouring TCU, the message BROAD_B may include the coordinates (e.g. GPS coordinates) of the train leader;
- send, to the train follower and / or a TCU, a message indicating that the train leader leaves the road.

As each vehicle in a vehicle train may be at a given time instant a train leader or train follower or train member, a TPU in an on-board device may be configured to perform any function defined herein for a train leader and a train follower and a train member.

A TCU in an edge node may be configured to:

- store and process all vehicle train related information (e.g. arrival time at TCU, current coordinates of train leader, size, speed, train leader identification, train follower identification);
- broadcast a signal BROAD_X including train information (e.g. length in meter, speed, number of vehicles, coordinate of train leader, etc) to the train leader and optionally to the train follower;
- broadcast a signal BROAD_Y including train access information to new vehicles (e.g. to allow the new vehicle to join to the vehicle train).

Vehicles wanting to access a reserved lane can be blocked (denied access) and or experience high access latency because of random spacing between the vehicles already present on the reserved lane that occur to be randomly distributed in space.

Because the free space between vehicles is randomly distributed it can quickly become insufficient for the size of a new vehicle.

Vehicle trains are used in which the inter-distance between vehicles in a vehicle train may be configured, for example be minimized (e.g. fixed to a minimum distance), while enforcing the vehicles in a given train to maintain the same speed.

The vehicle joining the reserved lane may either be a train leader of a new train or be added at the end of an already existing vehicle train.

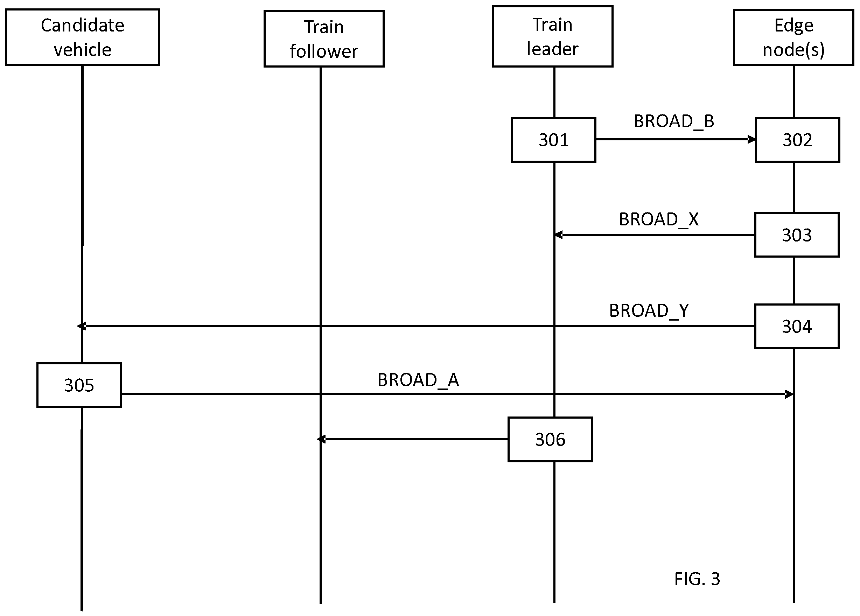

FIG. 3 shows a flowchart of a method for vehicle insertion in a vehicle train according to one or more example embodiments. The steps of the method may be implemented by a train leader (e.g. a TPU in a train leader), a train follower and one or more edge nodes (e.g. a TCU in an edge node) according to any example described herein.

While the steps are described in a sequential manner, the person skilled in the art will appreciate that some steps may be omitted, combined, performed in different order and / or in parallel.

In step 301, the train leader sends the BROAD_B signal, providing periodically to the neighbouring TCUs in edge nodes the coordinates (e.g. GPS coordinates) of the train leader. Each TCU may be periodically checking for the signal BROAD_B.

In step 302, a neighbouring TCU receives the signal BROAD_B and processes it. When an incoming vehicle train is detected, the TCU goes to step 303, otherwise step 301 may be executed again after step 302.

In step 303, the TCU uses train sensors to measure the size and / or the speed of the incoming vehicle train. This train information is then broadcasted to the train leader, and optionally to the train follower, using the signal BROAD_X. The TPU, in the train leader, and optionally the train follower, stores the received train information.

In step 304, the TCU sends the signal BROAD_Y, to inform candidate vehicles (directly or via road public signalisation) that vehicles can join the vehicle train at specified speed, and on specified road portion, defined for example by a range of road kms.

In step 305, if no train signalisation BROAD_Y has been sent, a vehicle may form its own vehicle train, by proceeding with BROAD_A signalling. This vehicle then becomes the "train leader" for the newly created vehicle train.

If a vehicle joining the newly created vehicle train detects that it is behind the train leader (e.g. by using the information about its own coordinates and the information received from the TCUs), this vehicle becomes the "train follower" of the newly created vehicle train.

In step 306 (optional), if train leader leaves the train, or it has a mechanical failure, the TPU of the train leader informs the train follower that the train follower now takes over the role of train leader.

The key advantage of the method for vehicle insertion in a vehicle train is a very efficient road capacity use, and the simplification (and possible automation) of the process of new vehicle insertion to the reserved and shared road lane.

The efficient road capacity use leads to cost reduction in terms of infrastructure savings and energy savings. Furthermore, the vehicle insertion latency can be reduced to zero.

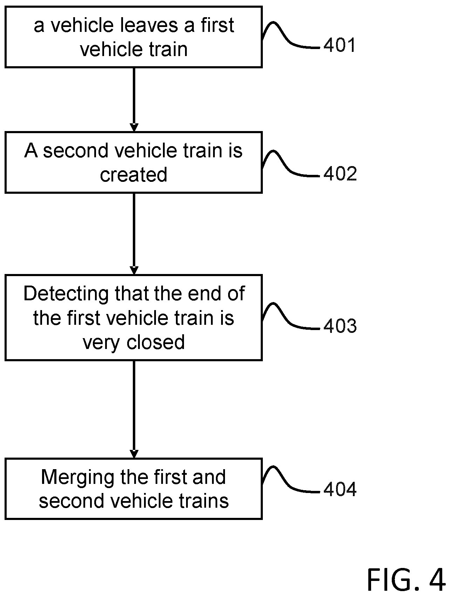

FIG. 4 shows a flowchart of a method for leaving a vehicle train according to one or more example embodiments. The steps of the method may be implemented by a train leader and train followers according to any example described herein.

While the steps are described in a sequential manner, the person skilled in the art will appreciate that some steps may be omitted, combined, performed in different order and / or in parallel.

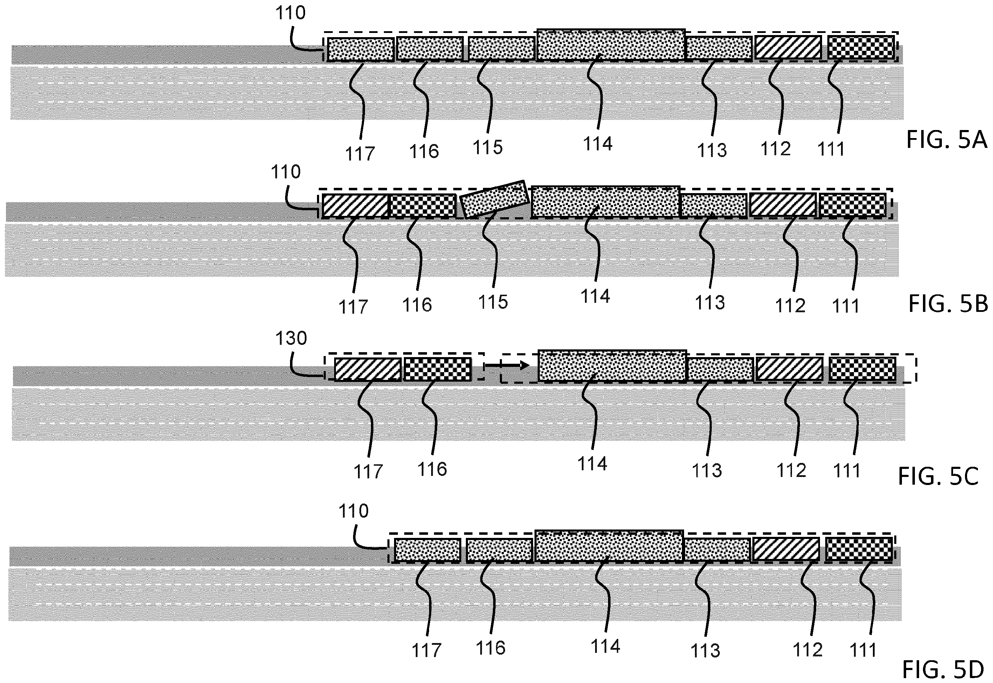

FIGS. 5A to 5D further illustrate the changes in the vehicle trains during the execution of the method.

FIG. 5A shows the initial situation with a vehicle train 110 including vehicles 111 to 117, vehicle 111 being the train leader and vehicle 112 being the train follower.

In step 401, as represented by FIG. 5B, a vehicle 115 leaving the train will potentially separate the train in two parts.

If this happens, two trains 110A and 110B are formed as represented by FIG. 5C, both trains 110A and 110B contain a train leader 111 (respectively 116) and a train follower 112 (respectively 117).

In step 402, to create the second train, the train leader 116 of the second train 110B may begin the communication with the TCUs as disclosed by reference to FIG. 3, e.g. the train leader 116 of the second train 110B may proceed with BROAD_A signalling.

In step 403, a train leader 116 of the second train 110B can detect that the end of the first train 110A is very close (by its own sensors or by using information received from TCUs). The train leader 116 can then decide to join its own vehicle train 110B to the preceding vehicle train 110A. It is to be noted that when a scheduling is generated for trains of vehicles as described herein, there are no need to merge trains, since all the trains have the same speed.

In step 404, the train leader 116 and train follower 117 of the second train 110B will lose their status of leader and follower, respectively, as they join the preceding train 110A: they become train members of the train 110A as represented by FIG. 5D.

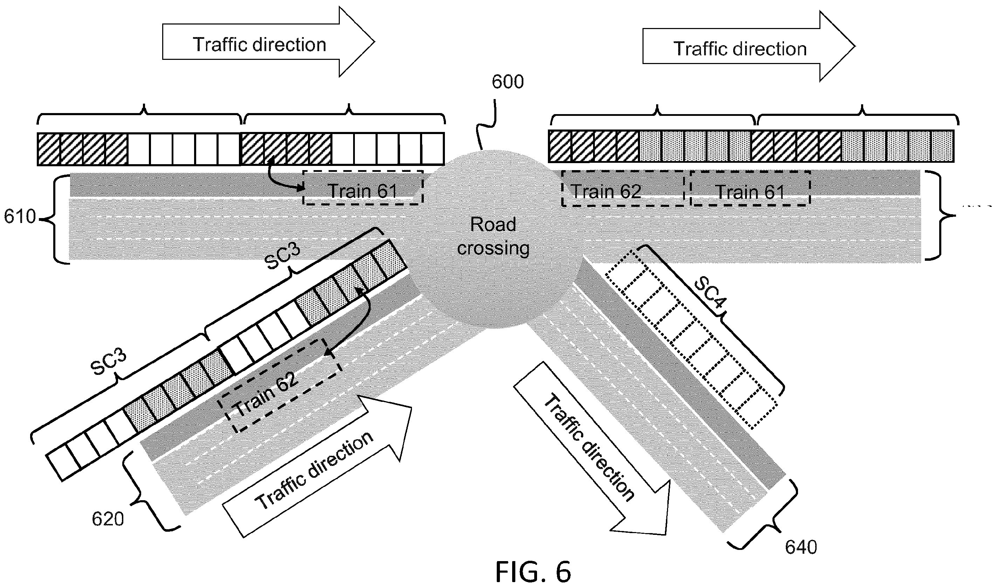

Although vehicle trains are capacity efficient, at the point of road crossing, the vehicle trains coming from different roads can experience a delay or a collision. For example if two trains are independently created, there is a risk of collision at the road crossing. This is illustrated by FIG. 6.

FIG. 6 is a simplified diagram showing a road network including: a road crossing 600 between two joining roads 610 and 620 and two leaving roads 630 and 640. If a train 61 arrives at the road crossing 600 and does not leave the road crossing before train 62 arrives, a collision will occur.

Traffic may be scheduled for all the roads of a road network in order to avoid train collisions and / or potential delays at road crossings. Traffic is scheduled for the road network by reserving respective dynamic road portions that may be used by vehicle trains. The traffic scheduling is generated such that there are enough resources (i.e. road portions) allocated on each road for satisfying the traffic demands.

Traffic demands are obtained to generate the traffic scheduling. Each traffic demand corresponds to a path from a source to a destination in the roads. The travel paths interconnecting each pair of source-destination may be statically allocated since these paths correspond paths in the physical road network.

A mesh topology may be used to represent roads in a road network and intersections (also referred to herein as the road crossings) between these roads. A mesh topology may be represented by a graph including edges and nodes. A node of the mesh topology corresponds to an intersection between two or more roads and an edge in the mesh topology corresponds to a road, i.e. a road corresponds in this representation to a road segment without intersection, e.g. a road between two intersections.

Each path corresponding to a traffic demand includes one or more interconnected roads of the road network. The traffic is scheduled for the entire road network, on the basis of the traffic demands and the mesh topology in order to account for all traffic demands for the entire road network.

To generate the scheduling in a simple and efficient manner, it may be assumed here that all vehicles in all vehicle trains are moving with the same speed.

The traffic scheduling is generated using a scheduling algorithm based on vehicle train scheduling cycles (also referred to herein simply as "scheduling cycles") assigned respectively to roads of the road network.

A vehicle train scheduling cycle is assigned to each road, whether the road joins or leaves an intersection or has no intersection with other roads.

In the example of FIG. 6, a scheduling cycle CS1 is assigned to road 610, a scheduling cycle CS2 is assigned to road 620, a scheduling cycle CS3 is assigned to road 630, a scheduling cycle CS4 is assigned to road 640.

As illustrated by FIG. 6, each scheduling cycle repeats over time and all the scheduling cycles have the duration, i.e. the same period. For example, each of the train scheduling cycles includes a same number of time slots. A train scheduling cycle may consist in NS time slots. In the example of FIG. 6, each train scheduling cycle CS1, CS2, CS3, CS4 includes NS= 9 time slots.

The time slots of a train scheduling cycle may be immediately successive time slots, i.e. without inter-slot delay or may have a fixed inter-slot delay corresponding to the minimum distance between two vehicle trains.

A train scheduling cycle may repeat over time for each road. The number of repetitions of a given train scheduling cycle may vary as a function of the length of the road to which the given train scheduling cycle is assigned. For all the train scheduling cycles that repeat periodically, the train scheduling cycle's time period is the same for all the roads in a road network.

The traffic on the roads is scheduled by reserving respective dynamic road portions for each path corresponding to a traffic demand. To reserve dynamic road portions for paths corresponding to traffic demands, an allocation on a time slot basis is performed: each train scheduling cycle includes equal size "time slots" to be allocated to paths in the road network, such that the scheduling of the entire traffic is based on a time-discrete resource reservation and achieves end-to-end resources reservation for travel paths in the road network.

For each path corresponding to a traffic demand and for each road on such a path, at least one time slot in a vehicle train scheduling cycle assigned to this road is allocated to the considered path. One or more time slots of the vehicle train scheduling cycles may be allocated for the considered path.

A time slot allocated in a vehicle train scheduling cycle assigned to a road defines a sliding spatial window moving over the considered road at the speed of a vehicle train and corresponds at each time to a road portion reserved on the considered road for a vehicle train. For time slot allocation, it is assumed that all vehicle trains move at the same speed. Time slots may be allocated in priority to roads with non-null traffic demand.

This means that within a train scheduling cycle assigned to a given road, a portion of the train scheduling cycle is reserved for a path including the given road, while other portions may be assigned to other paths to allows traffic associated with different paths to be accepted on the considered road.

In the simplified example of FIG. 6, each texture identifies the time slots in the scheduling cycles that are pre-reserved for a path.

In scheduling cycle CS1 assigned to road 610, the four first time slots are assigned to a first path Th1 including roads 610 and 630, while the last five time slots are not assigned. In scheduling cycle CS2 assigned to road 620, the four first time slots are not assigned, while the last five time slots are assigned to a second path Th2 including roads 620 and 630. In scheduling cycle CS3 assigned to road 630, the four first time slots are assigned to the first path Th1 including road 610 and 630, while the last five time slots are assigned to the second path Th2 including roads 620 and 630.

Consequently, when a first vehicle train 61, following the first path Th1 and leaving road 610 to join road 630, will have reserved slots for traveling on road 610 and then on road 630 without delay at road crossing 600. Likewise when a second vehicle train 62, following the second path Th2 and leaving road 620 to join road 630, will have reserved slots for traveling on road 620 and then on road 630 without delay at road crossing 600. Further, no collision between the first vehicle train 61 following path Th1 and second vehicle train 62, following the second path Th2.

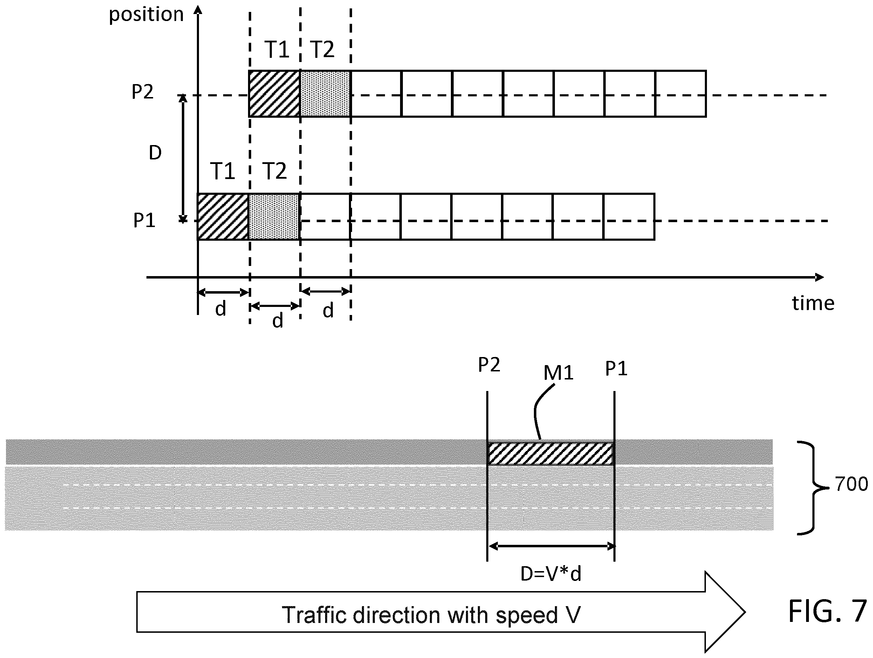

FIG. 7 illustrates aspects of the scheduling based on scheduling cycles and time slots for a simplified example.

The lower part of the figure shows two points P1 and P2 at distinct positions on the same road 700. The distance between P1 and P2 is D=V*d, where V is the speed of a vehicle train and d is the time slot duration. The scheduling cycle of road 700 includes a first time slot T1 allocated to a first path Th1 and a second time slot T2 allocated to a second path Th2, the other slots being not allocated.

In time domain, the scheduling cycles define a temporal view at a given point on the corresponding road. For example, during the first time slot T1, vehicles on a path Th1 associated to this slot T1 may be viewed passing at a first point P1. Then during second time slot T2, vehicles on a path Th2 associated to this slot T2 with be viewed passing at this first point P1. And so and, for each time slot in a scheduling cycle and again for each scheduling cycle that repeats over time. For the same corresponding road and for the second point P2, there is a corresponding time shift d equal to the duration of a time slot such that for example the first time slot T1 will start at the second point P2 when the time slot T2 start at the first point P1.

Equivalently, when considering the physical domain and the spatial view, the time slots in the train scheduling cycles may be mapped to respective dynamic road portions: a time slot allocated in a scheduling cycle assigned to a road in a path defines a sliding spatial window moving over the considered road at the speed of a vehicle train and corresponds at each time to a road portion reserved on the considered road for a vehicle train to move on the considered path. Each road portion that is mapped to a time slot, is, at a given time, a physical road portion of a road on which one or more vehicles may travel or be stationary. In the above example of FIG. 7, a moving portion M1 corresponding to time slot T1 is initially located between point P1 and P2 and moves at the speed of a vehicle train in traffic direction at speed V.

The allocation of road portions to vehicle trains may performed such that for each of the roads on a path corresponding to a traffic demand, the same time slot (i.e. same time slot position in a scheduling cycle) is allocated in the vehicle train scheduling cycle assigned to the concerned road. This means that a vehicle train will have corresponding time slots in the vehicle train scheduling cycles assigned to all the roads in the same path. This contributes to reduce delay and / or collision at road intersections.

Further the vehicle train scheduling cycles assigned to the roads joining or leaving a same intersection may be temporally aligned at time slot level at a given point of the intersection.

When allocating the time slots, at least one time slot in a vehicle train scheduling cycle assigned to a given road may be allocated to vehicles that may join the considered road. This allows to reserve road portions for "free will" vehicles that are not in a vehicle train and may join an existing vehicle train and / or may form a new vehicle train on the given road.

This pre-reservation of resources allows to independently insert the vehicle train(s) on different roads, while avoiding the collision at road crossing.

The allocation of road portions to vehicle trains may be performed such that the one or more road portions allocated for a road represent a traffic capacity that is above a traffic demand for the considered road. This allows to reserve traffic capacity (i.e. road portions) that meets or is above the traffic demand for the considered road.

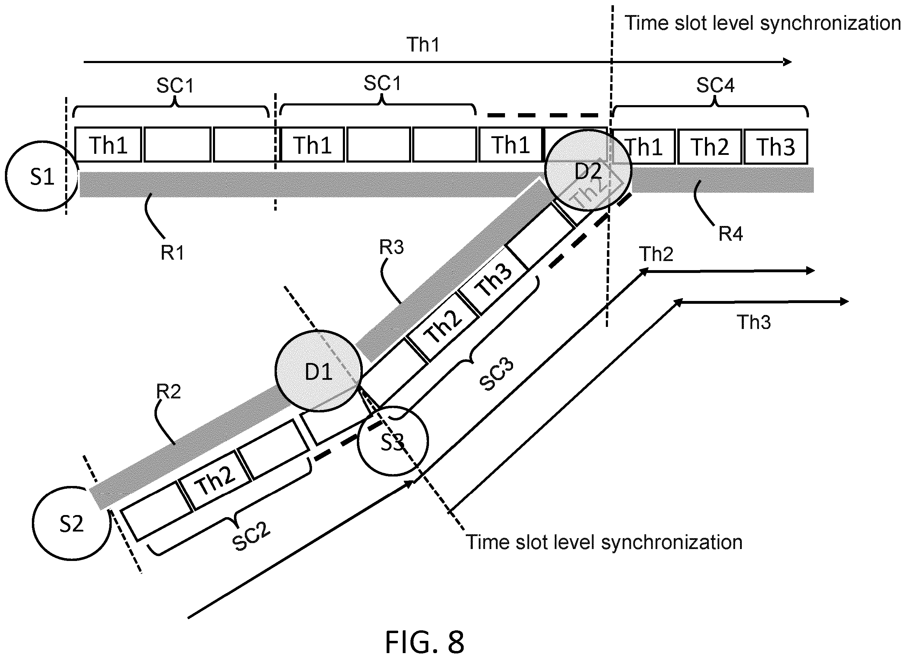

FIG. 8 is a diagram illustrating scheduling results according to a simplified example with 4 roads R1, R2, R3, R4, the sources S1, S2, S3, road crossings D1, D2 and paths Th1, Th2, Th3.

Path Th1 starts from source S1 and includes roads R1 followed by road R4. Path Th2 starts from source S2 and includes roads R2 followed by roads R3 and R4. Path Th2 start from source S3 and includes roads R3 followed by road R4.

Scheduling cycle SC1 is assigned to road R1, scheduling cycle SC2 is assigned to road R2, scheduling cycle SC3 is assigned to road R3, scheduling cycle SC4 is assigned to road R4, each of these scheduling cycles including 3 time slots.

Within each scheduling cycle, a part of resources is reserved, during a part of a cycle, for the vehicle trains that may follow a path. In scheduling cycle SC1, the first time slot is allocated to path Th1, the other slots are not allocated. In scheduling cycle SC2, the second time slot is allocated to path Th2, the other time slots are not allocated. In scheduling cycle SC3, the second time slot is allocated to path Th2, the third time slot is allocated to Th3 and the first time slot is not allocated. In scheduling cycle SC4, the first time slot is allocated to path Th1, the second time slot is allocated to path Th2 and the third time slot is allocated to Th3.

Further a synchronization rule applies to all the scheduling cycles of roads reaching or leaving an intersection. In the example of FIG. 8, the scheduling cycles SC1, SC2, SC4 are temporally synchronized at a synchronization point P2 of intersection D2 such that, at this synchronization point P2, a time slot in a first scheduling cycle SC1 starts at the same time as another (temporally aligned) time slot in another scheduling cycle SC2 (or respectively SC4).

The same synchronization rule applies to the scheduling cycles SC2, SC3 at a synchronization point P1 of intersection D1.

Generally, this synchronization rule at time slot level applies to all the scheduling cycles of roads reaching or leaving an intersection, for each intersection. The vehicle train scheduling cycles assigned to the roads joining or leaving a same intersection are temporally aligned at time slot level at a given point of the intersection such that, for this given point, a time slot starts at the same time in each of these vehicle train scheduling cycles.

It is to be noted that this synchronization rule works whatever the length of the roads provided that the duration of a time slot is small enough such that each road is mapped with an integer number of time slots given the train speed. For example, in FIG. 8:

- road R1 is covered by 8 time slots based on scheduling cycle CS1;
- road R2 is covered by 4 time slots based on scheduling cycle CS2;
- road R3 is covered by 5 time slots based on scheduling cycle CS3.

Each vehicle train following of the paths Th1, Th1, Th3 is properly scheduled, and can cross the road crossing without any additional latency, or change of their speed, and without collision.

FIG. 8 shows that for vehicle trains coming from S1, S2 and S3 (towards the destination intersection D1, D2), it is possible to achieve a vehicle train scheduling in a complex topology, without collisions (conflicts) of vehicle trains or delay at each intersection.

A vehicle train scheduler (VTS) (also referred to herein simply as the "scheduler" or "train scheduler") configured to generate traffic scheduling is described. A scheduler corresponds to a scheduling unit (e.g. scheduling circuitry) configured to perform one or more functions described herein for the scheduler.

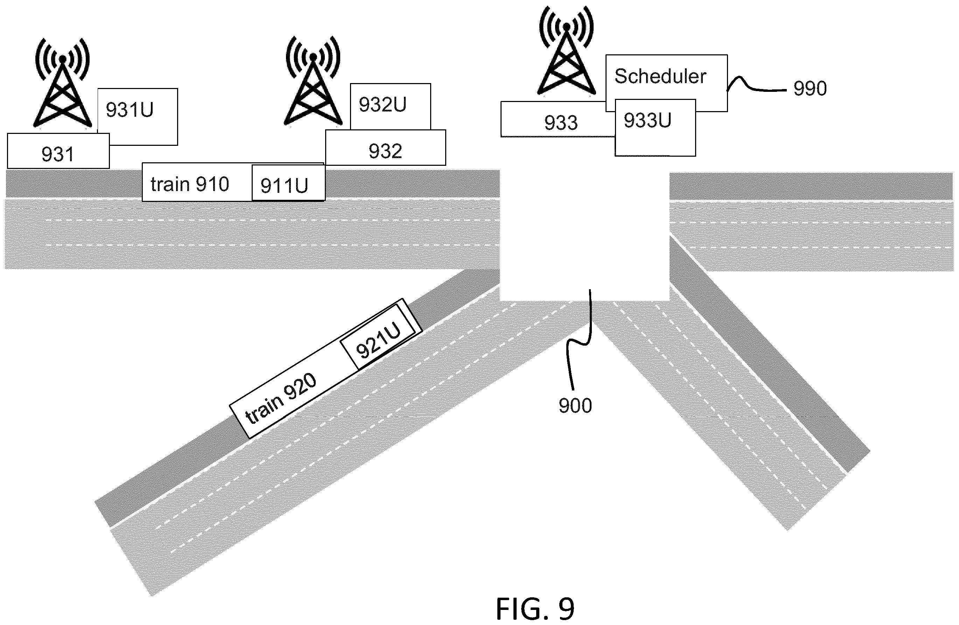

FIG. 9 is a schematic diagram illustrating a communication system adapted for ITS according to an example.

The communication system includes edge nodes 931, 932, 933 and vehicle trains 910, 920 including each a training leader equipped with a respective TPU 911U, 912U.

The train scheduler may be a logically centralized unit of a road communication infrastructure (e.g. an ITS): the train scheduler is configured to generate traffic scheduling based on traffic demands for all roads in a road network.

Alternatively, one or more edge nodes may include a vehicle train scheduler and all compute the same scheduling. For example, an edge node 933 localized at the road crossing 900 may include a TCU 933U and a scheduler 990.

It is to be noted that the traffic scheduling may be generated independently for each of two or more road sub-networks if there is no intersection between these road sub-networks: this reduces the mesh topology to be processed and allows schedulers (e.g. located at road intersection) associated with these sub-networks to generate independently their own scheduling.

The train scheduler may be configured to perform a scheduling algorithm to assign one or more train scheduling cycles to each road and allocate at least one time slot in each train scheduling cycle reservation to a vehicle train.

The train scheduler may be configured to generate scheduling results. The scheduling results may include scheduling information on reserved road portions. For example the scheduling information may include at least one of: information on the allocated road portions, identification of the vehicle train to which the road portion is allocated, identification of the vehicle leader of the vehicle train to which the road portion is allocated, etc. For example, scheduling information on a reserved road portion may include time availability of the road portion and/or coordinates (GPS coordinates) of the road portions.

The scheduling results and / or scheduling information derived from the scheduling results may be broadcasted to one or more edge nodes (e.g. to a Train Control Unit in an edge node). Part of the scheduling results concerning an intersection may be sent only to the concerned edge nodes. For example, the scheduling results and / or scheduling information concerning all the roads crossing at a given intersection may be sent to an edge node at the given intersection.

The edge nodes may be configured to broadcast the received scheduling results and / or scheduling information to one or more vehicles (e.g. to an on-board device in the concerned vehicle), for example to vehicles moving on a road toward the given intersection. The edge nodes and / or on-board devices may be configured to broadcast the scheduling results and / or scheduling information to one or more vehicles that may join one or the scheduled vehicle trains.

An edge node (e.g. a TCU in an edge node) and / or a scheduler may be configured to monitor a congestion level for roads in a road network. The edge node may be configured to report a current congestion level to a scheduler, to trigger computation of a new scheduling and thereby allows vehicle(s) wanting to join a reserved lane on a road to join a vehicle train or create a vehicle train.

The congestion level may be determined on the basis of traffic demands for a road network. For example the congestion level may be determined as a spatial density of vehicles per distance unit. A congestion level may be determined for each road and / or globally for the entire road network.

The train scheduler may be configured to determine when to update the scheduling of the traffic for the entire road network based on one or more congestion level(s) for the entire road network.

The scheduler may be configured to:

- calculate train scheduling cycles and time slot reservation for all roads of a road network;
- provide scheduling information to on-board devices (e.g. TPU) in vehicles, where the scheduling information may include identification of time slots allocated to paths in the scheduling cycle assigned to the roads of a road network

The on-board device (e.g. TPU) in a vehicle may be configured with scheduling-related functions to:

- receive scheduling information from a scheduler and / or an edge node;
- process scheduling information to calculate train access information, the train access information may include one or more distances to the next allocated road portion(s) and/or waiting time to join an existing vehicle train in a next allocated road portion(s), where the next allocated road portion(s) are reserved road portions allocated for paths;
- provide information to a vehicle driver concerning reserved road portions allocated for paths;
- broadcast the received scheduling information and / or train access information to other on-board devices (e.g. TPU) in vehicles, for example to the on-board devices in a neighboring;
- monitor and report current a congestion level to a scheduler and/ or to an edge node.

An example scheduling algorithm for generating a scheduling $\underline{x}$ for an ITS system with mesh topology, given a multiple intersection road graph $G$ and a traffic capacity demand matrix $A$ is described hereafter in detail.

It is assumed that the travel paths interconnecting each pair of source-destination in graph $G$ are statically allocated since these paths correspond to the physical road network. Indeed, for each pair of source and destination nodes ($s, d$), respectively, a path that interconnects them may be pre-computed and assigned to this ($s, d$) pair.

Let $G(V, E)$ be a non-directed graph describing a physical mesh topology of a road network (or subnetwork), where V is the set of nodes in the topology, E is the set of links (i.e. the roads in the road network). $|V|$ is the number of nodes (i.e. the intersections in the road network) in the topology. $|E|$ is the number of edges (i.e. roads) in the topology.

Let $A$ be a traffic capacity demand matrix in which element $a_{s,d}$, is the traffic rate ($\leq 1$, i.e. normalized to road capacity) sent by the source s to the destination d;

Let $S$ be the length, in number of time slots, of the vehicle train scheduling cycles. The length may be adapted of may be fixed. A vehicle train scheduling cycle of length is assigned to each road.

Let $\alpha$ be number of time slots per scheduling cycle that is reserved for free-will vehicle insertion and free-will choice of the cross-roads (expressed as a number of time slots). This allows to take into account vehicles that may leave or join a vehicle train or the vehicles in a train on a path that may want to follow another path.

The scheduling algorithm generates as output a set of binary values $x^k_{s,d,l}$ equal to 1 if time slot $k$ is used for a vehicle train on link $l$ on a path from source node $s$ to destination node $d$, and 0 otherwise. The matrix defined by all values of $x^k_{s,d,l}$ is noted $x$ and represents the schedule of vehicle trains on the roads.

An objective function may be defined. For example, for a given schedule length, one objective may be to allocate as many time slots as possible in order not to leave any time slot empty. This corresponds to minimization of the wasted capacity or maximization of the below quantity:

$$max \sum_{s=1}^{|V|} \sum_{d=1}^{|V|} \sum_{k=1}^{S} \sum_{l=1}^{|E|} x^k_{s,d,l}$$

One or more constraints may be defined for the allocation of time slots.

A first constraint may be defined for ensuring that the time slots for traffic from node s to node d can be used only if there is a non-zero traffic demand between these two nodes:

$$\sum_{k=1}^{S}\sum_{l=1}^{|E|} x_{s,d,l}^{k} \leq S \cdot |E| \cdot \lceil a_{s,d} \rceil, \quad \forall s, d \in V, s \neq d$$

A second constraint may be defined for ensuring that $\alpha$ slots are pre-reserved for the "free-will" vehicles (without belonging to vehicle trains):

$$\text{IF } k \leq \alpha \text{ THEN } x_{s,d,l}^{k} = 0 \text{ for all } (s, d, l)$$

A third constraint may be defined for ensuring that each time slot $k$ can be allocated only once per link $l$ (a link corresponding to a road without intersection) for any given combination of $s$ and $d$:

$$\sum_{s,d} x_{s,d,l}^{k} \leq 1, \qquad \forall l, \forall k$$

A fourth constraint may be defined for ensuring that the same time slot is used on all road of a given path between source $s$ and destination $d$: IF roads $l_1$ and $l_2$ belong to the pre-configured (e.g. static) path from $s$ to $d$, THEN $x_{s,d,l_1}^{k} = x_{s,d,l_2}^{k}$ for all ($s$, $d$, $k$).

A fifth constraint may be defined for ensuring that each source-destination pair is allocated the demanded capacity:

$$\sum_{k=1}^{S} x_{s,d,l}^{k} \geq S \cdot a_{s,d}, \qquad \forall s, d \in V, \forall l \text{ on } path(s, d)$$

This formulation enables to save latency and avoid collisions in the road network.

The scheduling algorithm using the above constraints and the objective function may be based for example on a Linear Programming method.

The scheduling results (e.g. the binary values $x_{s,d,l}^{k}$ defining the allocation of time slots) may be sent to the specific edge nodes at road intersections that are in charge of controlling traffic at their road intersections.

Scheduling information on the reserved dynamic portions may be derived from these binary scheduling values (e.g. $x_{s,d,l}^{k}$): for example scheduling information may include at least one of time availabilities and/or coordinates of reserved dynamic road portions. The scheduling information may be sent to the specific edge nodes at road intersections that are in charge of controlling traffic at their road intersections.

The scheduling algorithm does not consider each road crossing independently but provides an end-to-end solution for vehicles from their source to their destination. The vehicle trains may be formed as soon as a vehicle accesses a reserved lane on a road, and the trains may be terminated as soon as all the vehicles on the road in the considered train have reached their destination.

Furthermore, it is possible for each vehicle to leave its train (and/or change its destination) at will. It is also possible for each vehicle to not use the vehicle trains, and to cross the entire mesh road network of the ITS system, without using the vehicle trains. Even in all these cases, the scheduling is optimal and guaranteed. In these two cases, the vehicles shall use the particular "$\alpha$" time slots reserved for free-will vehicle insertion without using the vehicle trains, for their travel within the system, so as to not perturb the other vehicles.

Subtopologies of a road network may be managed by selected edge nodes (e.g. subtopology edge nodes) associated respectively to a subtopology. The selection process of the subtopology edge nodes and the subtopology partitioning (i.e., partition of the entire road network into road network sub-topologies) and selection of associated subtopology edge nodes is out of scope of this document and may be decided by an administrator or orchestrator. Further the partitioning may be static or dynamic.

For example, to manage a subtopology including all the roads that reach or leave a road intersection, a dedicated edge node located at this road intersection may be selected as subtopology edge node for managing this subtopology. This subtopology edge node may periodically exchange information with the scheduler concerning at least:

- The leader vehicle speed for each vehicle train that is scheduled on intersection exit $E_i$;
- The size of a vehicle train that is scheduled to leave intersection exit $E_i$
- The identifier of the edge node
- the identifier of intersection exit $E_i$

This information allows the scheduler that computes the scheduling as defined above to compute the traffic capacity demand matrix A. The traffic matrix is provided (by the road operator for instance) as input to the scheduler for computing the scheduling results.

It is to be noted that the nature of intersections, e.g. traffic light, roundabout, or patterns of a small amounts of interconnected intersections has no impact on the scheduling results. The scheduling algorithm works with any kind of road intersection.

The key advantage of this solution is a very efficient road capacity use in case with and without road intersections, with the possibility to vehicle trains "to switch" (change the highway) without any latency or decrease in speed. Furthermore, the congestion on complex topology of intersecting highways is completely avoided.

The efficient road capacity use leads to cost reduction in terms of infrastructure savings and energy savings.

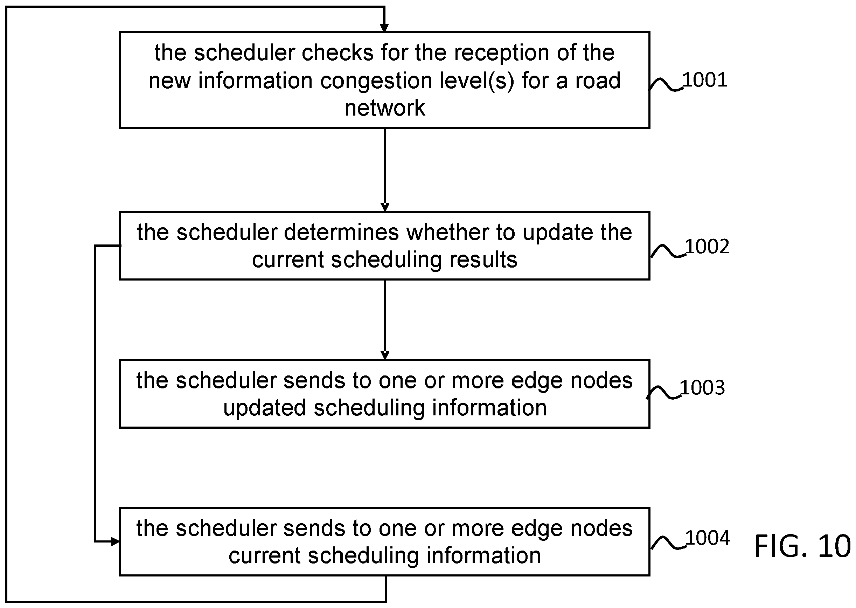

FIG. 10 shows a flowchart of a method for generating scheduling results according to one or more example embodiments. The steps of the method may be implemented by a scheduler and one or more edge nodes according to any example described herein.

While the steps are described in a sequential manner, the person skilled in the art will appreciate that some steps may be omitted, combined, performed in different order and / or in parallel.

Step 1001: the scheduler checks for the reception of the new information congestion level(s) for a road network. A congestion level may be a quantity of traffic per distance unit. If such information is received, the scheduler stores this information internally and go to Step 1002. Otherwise go to Step 1004.

Step 1002: based on the internally stored information about the congestion levels, the scheduler determines whether to update the current scheduling results and, if required, the scheduler updates the scheduling results by calculating new train scheduling cycles and new time slot allocations for paths.

The scheduler may also generate updated scheduling information including time availabilities and / or coordinates of scheduled road portions according to the updated scheduling results. If new train scheduling cycles and new time slot allocations are obtained, go to step 1003, otherwise go to step 1004.

Step 1003: the scheduler sends to one or more edge nodes updated scheduling information, e.g. time availabilities and / or coordinates of scheduled road portions according to the updated scheduling results. This made be done in n iterations, where the time availabilities and / or coordinates are updated incrementally (progressively) in each iteration to take into account movements of the reserved dynamic road portions. Step 1001 may be executed again after step 1003.

Step 1004: the scheduler sends to one or more edge nodes current scheduling information, e.g. time availabilities and / or coordinates of scheduled road portions according to the current scheduling results.

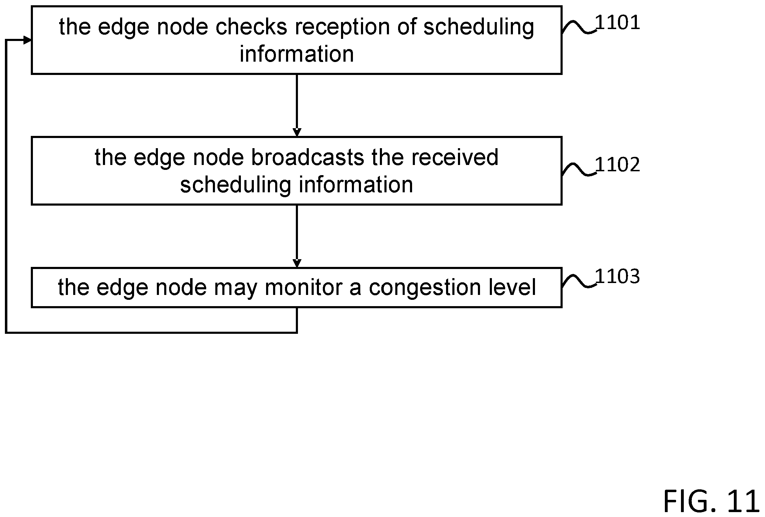

FIG. 11 shows a flowchart of a method for broadcasting scheduling information according to one or more example embodiments. The steps of the method may be implemented by an edge node (e.g. a TCU in an edge node) according to any example described herein.

While the steps are described in a sequential manner, the person skilled in the art will appreciate that some steps may be omitted, combined, performed in different order and / or in parallel.

Step 1101: the edge node checks reception of scheduling information (e.g. time availabilities and / or coordinates of reserved road portions). If such scheduling information is received from a scheduler, process the received scheduling information and store the received scheduling information internally. Step 1102 may be executed after step 1101. The received scheduling information may be adapted to the format that can be broadcasted to the destination vehicles on the road before being broadcasted.

Step 1102: the edge node broadcasts the received scheduling information. This scheduling information is destined to the vehicles wanting to join a vehicle train. Step 1103 may be executed after step 1101.

Step 1103 is optional. In step 1103, the edge node may monitor a congestion level. A congestion level may be a quantity of traffic per distance unit. A congestion level may be based on traffic demand, e.g. traffic demand from vehicle(s) wanting to join a vehicle train. The congestion level is sent to the scheduler. Step 1101 may be executed after step 1103.

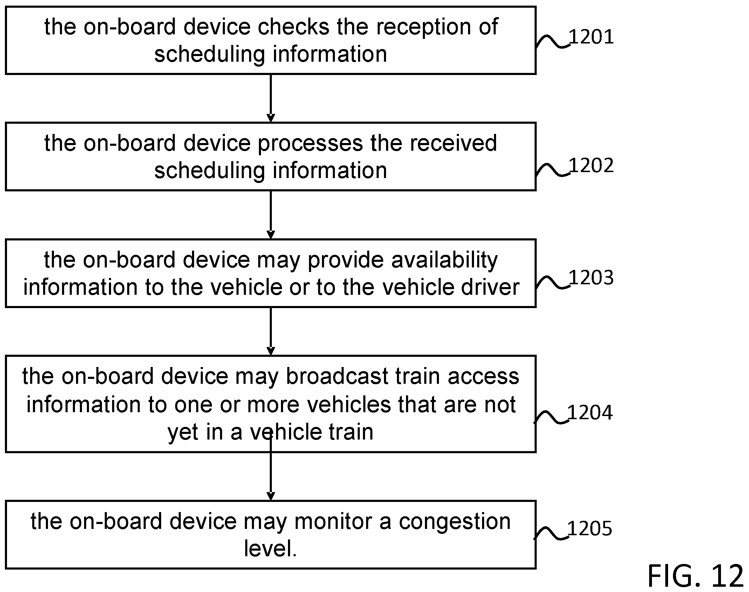

FIG. 12 shows a flowchart of a method for processing scheduling information according to one or more example embodiments. The steps of the method may be implemented by an on-board device (e.g. a TPU) in a vehicle according to any example described herein.

While the steps are described in a sequential manner, the person skilled in the art will appreciate that some steps may be omitted, combined, performed in different order and / or in parallel.

Step 1201: the on-board device checks the reception of scheduling information. The scheduling information may include time availabilities and / or coordinates of allocated road portions. The road portions may be road portions selected by an edge node from which the scheduling information are received. The scheduling information may concern one or more roads joining or leaving one or more road intersections crossing the road on which the vehicle is moving. If scheduling information is received, go to step 1202. Otherwise, go to step 1203.

Step 1202: the on-board device processes the received scheduling information. In particular, the on-board device may calculate train access information. The access information may include one or more distances to the next allocated road portion(s) and/or waiting time to join an existing vehicle train in a next allocated road portion(s), where the next allocated road portion(s) are reserved road portions allocated for paths. The on-board device may store the calculated distances and / or waiting times locally. Step 1203 may be executed after step 1202. After step 1202, at least one of steps 1203, 1204 and 1205 may be executed.

Step 1203 is optional. In step 1203, based on the locally stored train access information, the on-board device may provide availability information to the vehicle (or to the vehicle driver), e.g. information about at least one next reserved time slot to join a vehicle train and / or at least one distance to a next reserved road portion to join a vehicle train.

Step 1204 is optional. In step 1304 the on-board device may broadcast train access information to one or more vehicles that are not yet in a vehicle train on a reserved lane, the train access information concerning selected vehicle trains(s) (e.g. neighboring vehicles trains) that may be joined on one or more roads (e.g. one or more roads joining or leaving one or more road intersections crossing the road on which the vehicle is moving). The train access information may include train access information computed for the selected vehicle trains(s).

Step 1205 is optional. In step 1205, the on-board device may monitor a congestion level. A congestion level may be a quantity of traffic per distance unit. A congestion level may be based on traffic demand(s), e.g. traffic demand from vehicle(s) wanting to join a vehicle train. The congestion level is sent to the scheduler and / or to an edge node. The congestion level may be broadcasted. Step 1201 may be executed after step 1205.

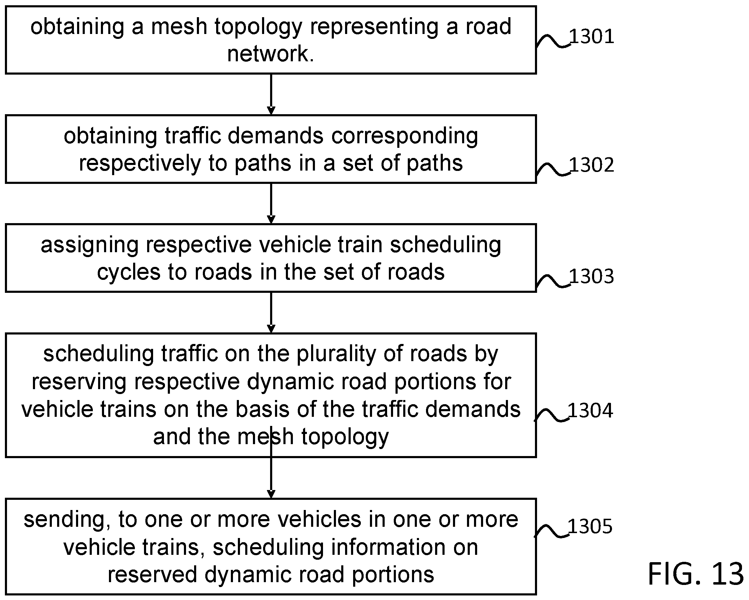

FIG. 13 shows a flowchart of a method for generating scheduling results according to one or more example embodiments. The steps of the method may be implemented by a scheduler according to any example described herein.

While the steps are described in a sequential manner, the person skilled in the art will appreciate that some steps may be omitted, combined, performed in different order and / or in parallel.

Step 1301 includes: obtaining a mesh topology representing a road network. The road network includes a set of roads and a set of intersections between roads in the set of roads.

Step 1302 includes: obtaining traffic demands corresponding respectively to paths in a set of paths, wherein each path is from a source to a destination in the set of roads.

Step 1303 includes: assigning respective vehicle train scheduling cycles to roads in the set of roads. Each of the vehicle train scheduling cycles includes a same number of time slots and repeats over time.

Step 1304 includes: scheduling traffic on the plurality of roads by reserving respective dynamic road portions for vehicle trains on the basis of the traffic demands and the mesh topology. It is assumed that all vehicles in all vehicle trains are moving with the same speed.

Reserving dynamic road portions for vehicle trains comprises: allocating, to each road on a path corresponding to a traffic demand, at least one time slot in a vehicle train scheduling cycle assigned to the considered road. A time slot allocated in a vehicle train scheduling cycle assigned to a road defines a sliding spatial window moving over the considered road at the speed of a vehicle train and corresponds at each time to a road portion reserved on the considered road for a vehicle train to move on the considered path.

Reserving dynamic road portions may comprise: allocating, for at least one road, at least one time slot in a vehicle train scheduling cycle assigned to the considered road for vehicles that may join the considered road.

Reserving dynamic road portions may be performed such that, for each of the roads on a path corresponding to a traffic demand, the same time slot is allocated in the vehicle train scheduling cycle assigned to the concerned road.

Reserving dynamic road portions may be performed such that the one or more road portions allocated for a road represent a traffic capacity that is above a traffic demand for the considered road.

The vehicle train scheduling cycles assigned to the roads joining or leaving a same intersection may be temporally aligned at time slot level at a given point of the intersection.

Step 1305 includes: sending, to one or more vehicles in one or more vehicle trains, scheduling information on reserved dynamic road portions. The scheduling information may include at least one of time availabilities and coordinates of reserved dynamic road portion.

The method may comprise: receiving at least one traffic demand corresponding respectively to a journey by a source and destination, wherein sending the scheduling information is performed in response to receiving at least one traffic demand corresponding respectively to a journey by a source and destination.

The method may comprise: monitoring a congestion level based on traffic demands; determining when to update the scheduling of the traffic on the plurality of roads based on the congestion level.

The method may comprise: updating the scheduling of the traffic on the plurality of roads to generate updated scheduling information on road portions allocated to vehicle trains; sending, to one or more vehicles in one or more vehicle trains, the updated scheduling information.

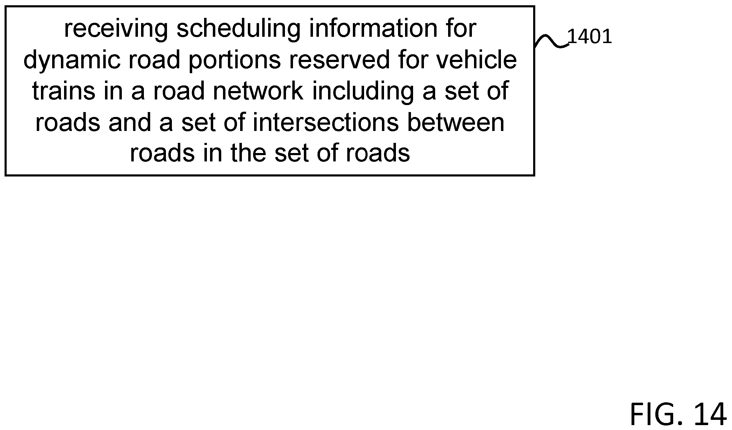

FIG. 14 shows a flowchart of a method for using scheduling information according to one or more example embodiments.

The steps of the method may be implemented by a scheduler according to any example described herein.

While the steps are described in a sequential manner, the person skilled in the art will appreciate that some steps may be omitted, combined, performed in different order and / or in parallel.

Step 1401 includes: receiving scheduling information for dynamic road portions reserved for vehicle trains in a road network, wherein the road network includes a set of roads and a set of intersections between roads in the set of roads, wherein all vehicles in all vehicle trains are moving with the same speed.

Respective vehicle train scheduling cycles are assigned to roads in the set of roads. Each of the vehicle train scheduling cycles includes a same number of time slots and repeats over time.

The dynamic road portions are reserved such that at least one time slot in a vehicle train scheduling cycle assigned to a road on a path corresponding to a traffic demand is allocated to the considered path. A time slot allocated in a vehicle train scheduling cycle assigned to a road defines a sliding spatial window moving over the considered road at the speed of a vehicle train and corresponds at each time to a road portion reserved on the considered road for a vehicle train to move on the considered path.

The method may comprise: sending the scheduling information to one or more vehicles that are not in a vehicle train among the vehicle trains.

The method may comprise: calculating, based on the scheduling information, one or more distances to a reserved road portion and/or waiting time to join an existing vehicle train in a reserve road portion.

The scheduling information may include at least one of time availabilities and coordinates of reserved dynamic road portions.

The embodiments described herein are applicable to any transportation system with cars, with or without human passengers, but also to other types of transportation systems such as automated transportation of items in warehouses, transportation of goods in ports. In this perspective, the term "passenger" should be more generally interpreted as a transported item (e.g., a human passenger, a good in a warehouse or port) and the term "vehicle" refers to different types of vehicles (e.g., cars, forklift trucks, etc).

It should be appreciated by those skilled in the art that any functions, engines, block diagrams, flow diagrams, state transition diagrams, flowchart and / or data structures described herein represent conceptual views of illustrative circuitry embodying the principles of the invention. Similarly, it will be appreciated that any flow charts, flow diagrams, state transition diagrams, pseudo code, and the like represent various processes.

Although a flow chart may describe a set of steps as a sequential process, many of the steps may be performed in parallel, concurrently or simultaneously. Also some steps may be omitted, combined or performed in different order. A process may be terminated when its steps are completed but may also have additional steps not disclosed in the figure or description. A process may correspond to a method, function, procedure, subroutine, subprogram, etc. When a process corresponds to a function, its termination may correspond to a return of the function to the calling function or the main function.

Each described process, function, engine, block, step described herein can be implemented in hardware, software, firmware, middleware, microcode, or any suitable combination thereof.

When implemented in software, firmware, middleware or microcode, instructions to perform the necessary tasks may be stored in a computer readable medium that may be or not included in a host device or host system. The instructions may be transmitted over the computer-readable medium and be loaded onto the host device or host system. The instructions are configured to cause the host device or host system to perform one or more functions disclosed herein. For example, as mentioned above, according to one or more examples, at least one memory may include or store instructions, the at least one memory and the instructions may be configured to, with at least one processor, cause the host device or host system to perform the one or more functions. Additionally, the processor, memory and instructions, serve as means for providing or causing performance by the host device or host system of one or more functions disclosed herein.

The host device or host system may be a general-purpose computer and / or computing system, a special purpose computer and / or computing system, a programmable processing apparatus and / or system, a machine, etc. The host device or host system may be or include or be part of: a user equipment, client device, mobile phone, laptop, computer, network element, data server, network resource controller, network apparatus, router, gateway, network node, computer, cloud-based server, web server, application server, proxy server, etc.

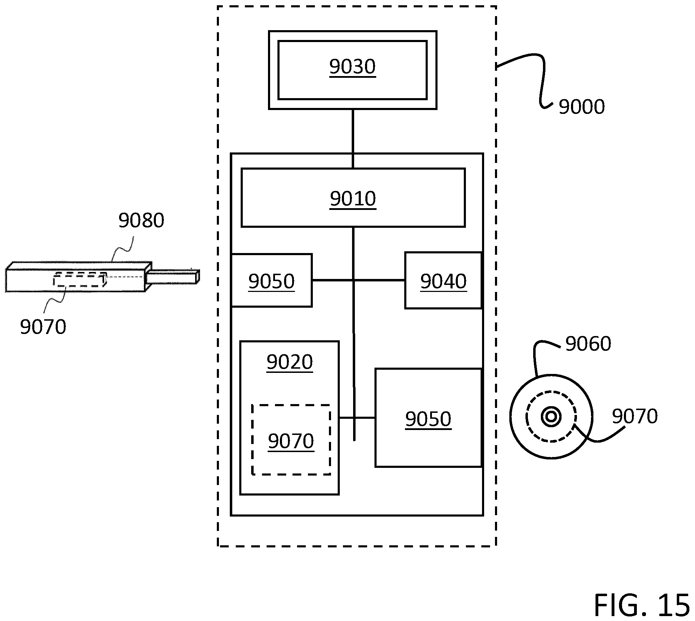

FIG. 15 illustrates an example embodiment of an apparatus 9000. The apparatus 9000 may be a host device, or be part of a host device or host system as disclosed herein. The apparatus 9000 may be used for performing one or more or all steps of a method disclosed herein. The apparatus 9000 may be used for implementing one or more functions of an edge node or an on-board device according to any embodiments disclosed herein.

As represented schematically by FIG. 15, the apparatus 9000 may include at least one processor 9010 and at least one memory 9020. The apparatus 9000 may include one or more communication interfaces 9040 (e.g. network interfaces for access to a wired / wireless network, including Ethernet interface, WIFI interface, etc) connected to the processor and configured to communicate via wired / non wired communication link(s). The apparatus 9000 may include user interfaces 9030 (e.g. keyboard, mouse, display screen, etc) connected with the processor. The apparatus 9000 may further include one or more media drives 9050 for reading a computer-readable storage medium (e.g. digital storage disc 9060 (CD-ROM, DVD, Blue Ray, etc), USB key 9080, etc). The processor 9010 is connected to each of the other components 9020, 9030, 9040, 9050 in order to control operation thereof.

The memory 9020 may include a random access memory (RAM), cache memory, non-volatile memory, backup memory (e.g., programmable or flash memories), read-only memory (ROM), a hard disk drive (HDD), a solid state drive (SSD) or any combination thereof. The ROM of the memory 9020 may be configured to store, amongst other things, an operating system of the apparatus 9000 and / or one or more computer program code of one or more software applications. The RAM of the memory 9020 may be used by the processor 9010 for the temporary storage of data.

The processor 9010 may be configured to store, read, load, execute and/or otherwise process instructions 9070 stored in a computer-readable storage medium 9060, 9080 and / or in the memory 9020 such that, when the instructions are executed by the processor, causes the apparatus 9000 to perform one or more or all steps of a method described herein for the concerned apparatus 9000.

The instructions may correspond to program instructions or computer program code. The instructions may include one or more code segments. A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

When provided by a processor, the functions may be provided by a single dedicated processor, by a single shared processor, or by a plurality of individual processors, some of which may be shared. The term "processor" should not be construed to refer exclusively to hardware capable of executing software and may implicitly include one or more processing circuits, whether programmable or not. A processor or likewise a processing circuit may correspond to a digital signal processor (DSP), a network processor, an application specific integrated circuit (ASIC), a field programmable gate array (FPGA), a System-on-Chips (SoC), a Central Processing Unit (CPU), an arithmetic logic unit (ALU), a programmable logic unit (PLU), a processing core, a programmable logic, a microprocessor, a controller, a microcontroller, a microcomputer, a quantum processor, any device capable of responding to and/or executing instructions in a defined manner and/or according to a defined logic. Other hardware, conventional or custom, may also be included. A processor or processing circuit may be configured to execute instructions adapted for causing the host device or host system to perform one or more functions disclosed herein for the host device or host system.

A computer readable medium or computer readable storage medium may be any tangible storage medium suitable for storing instructions readable by a computer or a processor. A computer readable medium may be more generally any storage medium capable of storing and/or containing and/or carrying instructions and/or data. The computer readable medium may be a non-transitory computer readable medium. The term "non-transitory", as used herein, is a limitation of the medium itself (i.e., tangible, not a signal) as opposed to a limitation on data storage persistency (e.g., RAM vs. ROM).

A computer-readable medium may be a portable or fixed storage medium. A computer readable medium may include one or more storage device like a permanent mass storage device, magnetic storage medium, optical storage medium, digital storage disc (CD-ROM, DVD, Blue Ray, etc), USB key or dongle or peripheral, a memory suitable for storing instructions readable by a computer or a processor.

A memory suitable for storing instructions readable by a computer or a processor may be for example: read only memory (ROM), a permanent mass storage device such as a disk drive, a hard disk drive (HDD), a solid state drive (SSD), a memory card, a core memory, a flash memory, or any combination thereof.

In the present description, the wording "means configured to perform one or more functions" or "means for performing one or more functions" may correspond to one or more functional blocks comprising circuitry that is adapted for performing or configured to perform the concerned function(s). The block may perform itself this function or may cooperate and / or communicate with other one or more blocks to perform this function. The "means" may correspond to or be implemented as "one or more modules", "one or more devices", "one or more units", etc. The means may include at least one processor and at least one memory including computer program code, wherein the at least one memory and the computer program code are configured to, with the at least one processor, cause an apparatus or system to perform the concerned function(s).

As used in this application, the term "circuitry" may refer to one or more or all of the following:

    (a) hardware-only circuit implementations (such as implementations in only analog and/or digital circuitry) and

(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and

(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device.

The term circuitry may cover digital signal processor (DSP) hardware, network processor, application specific integrated circuit (ASIC), field programmable gate array (FPGA), etc. The circuitry may be or include, for example, hardware, programmable logic, a programmable processor that executes software or firmware, and/or any combination thereof (e.g. a processor, control unit/entity, controller) to execute instructions or software and control transmission and receptions of signals, and a memory to store data and/or instructions.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

While aspects of the present disclosure have been particularly shown and described with reference to the embodiments above, it will be understood by those skilled in the art that various additional embodiments may be contemplated by the modification of the disclosed machines, systems and methods without departing from the scope of what is disclosed. Such embodiments should be understood to fall within the scope of the present disclosure as determined based upon the claims and any equivalents thereof.

LIST OF MAIN ABBREVIATIONS

GPS     Global Positioning System
ITS       Intelligent Transportation System
TCU      Train Control Unit
TPU      Train On-Board Unit
VTS      Vehicle Train Scheduler

**Claims**

1.   A computer-implemented method comprising:

obtaining a mesh topology representing a road network including a set of roads and a set of intersections between roads in the set of roads;
obtaining traffic demands corresponding respectively to paths in a set of paths, wherein each path is from a source to a destination in the set of roads;
assigning respective vehicle train scheduling cycles to roads in the set of roads, wherein each of the vehicle train scheduling cycles includes a same number of time slots and repeats over time;
scheduling traffic on the plurality of roads by reserving respective dynamic road portions for vehicle trains on the basis of the traffic demands and the mesh topology, wherein all vehicles in all vehicle trains are moving with the same speed;

wherein reserving dynamic road portions for vehicle trains comprises:
allocating, to each road on a path corresponding to a traffic demand, at least one time slot in a vehicle train scheduling cycle assigned to the considered road, wherein a time slot allocated in a vehicle train scheduling cycle assigned to a road defines a sliding spatial window moving over the considered road at the speed of a vehicle train and corresponds at each time to a road portion reserved on the considered road for a vehicle train to move on the considered path.

2.  The computer-implemented method of claim 1, comprising:
    sending, to one or more vehicles in one or more vehicle trains, scheduling information on reserved dynamic road portions.

3.  The computer-implemented method of claim 1, comprising:
    receiving at least one traffic demand corresponding respectively to a journey by a source and destination, wherein sending the scheduling information is performed in response to receiving at least one traffic demand corresponding respectively to a journey by a source and destination.

4.  The computer-implemented method of claim 2 or 3, wherein the scheduling information includes at least one of time availabilities and coordinates of reserved dynamic road portions.

5.  The computer-implemented method of claim 1, comprising:

    monitoring a congestion level based on traffic demands;
    determining when to update the scheduling of the traffic on the plurality of roads based on the congestion level.

6.  The computer-implemented method of claim 1, comprising:

    updating the scheduling of the traffic on the plurality of roads to generate updated scheduling information on road portions allocated to vehicle trains;
    sending, to one or more vehicles in one or more vehicle trains, the updated scheduling information.

7.  The computer-implemented method of claim 1, wherein reserving dynamic road portions comprises:
    allocating, for at least one road, at least one time slot in a vehicle train scheduling cycle assigned to the considered road for vehicles that may join the considered road.

8.  The computer-implemented method of claim 1, wherein reserving dynamic road portions is performed such that, for each of the roads on a path corresponding to a traffic demand, the same time slot is allocated in the vehicle train scheduling cycle assigned to the concerned road.

9.  The computer-implemented method of claim 1, wherein the vehicle train scheduling cycles assigned to the roads joining or leaving a same intersection are temporally aligned at time slot level at a given point of the intersection.

10. The computer-implemented method of claim 1, wherein reserving dynamic road portions is performed such that the one or more road portions allocated for a road represent a traffic capacity that is above a traffic demand for the considered road.

11. A computer-implemented method comprising:

    receiving scheduling information for dynamic road portions reserved for vehicle trains in a road network including a set of roads and a set of intersections between roads in the set of roads, wherein all vehicles in all vehicle trains are moving with the same speed;
    wherein respective vehicle train scheduling cycles are assigned to roads in the set of roads, wherein each of the vehicle train scheduling cycles includes a same number of time slots and repeats over time;
    wherein the dynamic road portions are reserved such that at least one time slot in a vehicle train scheduling cycle assigned to a road on a path corresponding to a traffic demand is allocated to the considered path, wherein a time slot allocated in a vehicle train scheduling cycle assigned to a road defines a sliding spatial window moving over the considered road at the speed of a vehicle train and corresponds at each time to a road portion reserved on the considered road for a vehicle train to move on the considered path.

12. The computer-implemented method of claim 11, comprising:
calculating, based on the scheduling information, one or more distances to a reserved road portion and/or waiting time to join an existing vehicle train in a reserve road portion.

13. The computer-implemented method of any of claim 11 to 12, wherein the scheduling information includes at least one of time availabilities and coordinates of reserved dynamic road portions.

14. An apparatus comprising means to implement a method according to any of claim 1-13.

15. A computer program comprises instructions that, when executed by an apparatus, cause the apparatus to perform a method according to any of claim 1-13.

FIG. 1

**FIG. 2**

EP 4 553 807 A1

FIG. 3

EP 4 553 807 A1

```
┌─────────────────────┐
│  a vehicle leaves a first │ ⌇ 401
│     vehicle train       │
└─────────────────────┘
           │
           ▼
┌─────────────────────┐
│ A second vehicle train is │ ⌇ 402
│        created          │
└─────────────────────┘
           │
           ▼
┌─────────────────────┐
│ Detecting that the end of │
│  the first vehicle train is │ ⌇ 403
│       very closed       │
└─────────────────────┘
           │
           ▼
┌─────────────────────┐
│   Merging the first and   │ ⌇ 404
│   second vehicle trains   │
└─────────────────────┘
```

FIG. 4

EP 4 553 807 A1

110

117 116 115 114 113 112 111 **FIG. 5A**

110

117 116 115 114 113 112 111 **FIG. 5B**

130

117 116 114 113 112 111 **FIG. 5C**

110

117 116 114 113 112 111 **FIG. 5D**

24

FIG. 6

EP 4 553 807 A1

FIG. 7

FIG. 8

EP 4 553 807 A1

FIG. 9

```
┌─────────────────────────────────────────────┐
│  the scheduler checks for the reception of the │
│  new information congestion level(s) for a road │──1001
│                   network                       │
└─────────────────────────────────────────────┘
                        │
                        ▼
┌─────────────────────────────────────────────┐
│  the scheduler determines whether to update the │──1002
│           current scheduling results            │
└─────────────────────────────────────────────┘
                        │
                        ▼
┌─────────────────────────────────────────────┐
│  the scheduler sends to one or more edge nodes  │──1003
│           updated scheduling information        │
└─────────────────────────────────────────────┘

┌─────────────────────────────────────────────┐
│  the scheduler sends to one or more edge nodes  │──1004
│           current scheduling information        │
└─────────────────────────────────────────────┘
```

FIG. 10

EP 4 553 807 A1

```
┌─────────────────────────────────────────┐
│  the edge node checks reception of      │ ⟆1101
│  scheduling information                 │
└─────────────────────────────────────────┘
                    │
                    ▼
┌─────────────────────────────────────────┐
│  the edge node broadcasts the received  │ ⟆1102
│  scheduling information                 │
└─────────────────────────────────────────┘
                    │
                    ▼
┌─────────────────────────────────────────┐
│  the edge node may monitor a congestion level │ ⟆1103
└─────────────────────────────────────────┘
```

FIG. 11

```
┌─────────────────────────────────────────────┐
│   the on-board device checks the reception of │  ⌇1201
│            scheduling information              │
└─────────────────────────────────────────────┘
                        │
                        ▼
┌─────────────────────────────────────────────┐
│   the on-board device processes the received  │
│            scheduling information              │  ⌇1202
└─────────────────────────────────────────────┘
                        │
                        ▼
┌─────────────────────────────────────────────┐
│   the on-board device may provide availability │
│  information to the vehicle or to the vehicle driver │  ⌇1203
└─────────────────────────────────────────────┘
                        │
                        ▼
┌─────────────────────────────────────────────┐
│  the on-board device may broadcast train access │
│  information to one or more vehicles that are not │  ⌇1204
│            yet in a vehicle train              │
└─────────────────────────────────────────────┘
                        │
                        ▼
┌─────────────────────────────────────────────┐
│   the on-board device may monitor a congestion │  ⌇1205
│                   level.                       │
└─────────────────────────────────────────────┘
```

FIG. 12

EP 4 553 807 A1

obtaining a mesh topology representing a road network.                    ∿1301

↓

obtaining traffic demands corresponding respectively to paths in a set of paths    ∿1302

↓

assigning respective vehicle train scheduling cycles to roads in the set of roads    ∿1303

↓

scheduling traffic on the plurality of roads by reserving respective dynamic road portions for vehicle trains on the basis of the traffic demands and the mesh topology    ∿1304

↓

sending, to one or more vehicles in one or more vehicle trains, scheduling information on reserved dynamic road portions    ∿1305

FIG. 13

receiving scheduling information for dynamic road portions reserved for vehicle trains in a road network including a set of roads and a set of intersections between roads in the set of roads 1401

FIG. 14

EP 4 553 807 A1

FIG. 15

EP 4 553 807 A1

Europäisches
Patentamt

European
Patent Office

Office européen
des brevets

# EUROPEAN SEARCH REPORT

**Application Number**

EP 24 21 2095

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/292986 A1 (BRANDIN MAGNUS [SE] ET AL) 15 September 2022 (2022-09-15) | 1-6, 8-11, 13-15 | INV.<br>G08G1/01<br>G08G1/081 |
| A | * paragraphs [0007] - [0009], [0033] - paragraph [0057]; figures 2A-2C * | 7,12 | G08G1/123<br>G08G1/00 |
| | - - - - - | | |
| A | EP 3 528 078 B1 (HERE GLOBAL BV [NL]) 3 August 2022 (2022-08-03)<br>* paragraph [0023] - paragraphs [0038], [0072]; figure 8 * | 3-6,13 | |
| | - - - - - | | |
| A | US 2019/051158 A1 (FELIP LEON JAVIER [US] ET AL) 14 February 2019 (2019-02-14)<br>* paragraph [0038] - paragraph [0070]; figure 7 * | 3-6,13 | |
| | - - - - - | | |

**TECHNICAL FIELDS SEARCHED (IPC)**

G08G
G06Q

The present search report has been drawn up for all claims

| Place of search | Date of completion of the search | Examiner |
|---|---|---|
| The Hague | 7 March 2025 | Malagoli, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

# EP 4 553 807 A1

## ANNEX TO THE EUROPEAN SEARCH REPORT
## ON EUROPEAN PATENT APPLICATION NO.

EP 24 21 2095

07-03-2025

| Patent document cited in search report | Publication date | Patent family member(s) | | Publication date |
|---|---|---|---|---|
| US 2022292986 A1 | 15-09-2022 | CN | 114787887 A | 22-07-2022 |
| | | EP | 3836113 A1 | 16-06-2021 |
| | | US | 2022292986 A1 | 15-09-2022 |
| | | WO | 2021115283 A1 | 17-06-2021 |
| EP 3528078 B1 | 03-08-2022 | CN | 110164122 A | 23-08-2019 |
| | | EP | 3528078 A1 | 21-08-2019 |
| | | US | 2019250639 A1 | 15-08-2019 |
| US 2019051158 A1 | 14-02-2019 | CN | 111527531 A | 11-08-2020 |
| | | CN | 113888874 A | 04-01-2022 |
| | | DE | 112019001724 T5 | 07-01-2021 |
| | | US | 2019051158 A1 | 14-02-2019 |
| | | US | 2021407285 A1 | 30-12-2021 |
| | | WO | 2019190695 A1 | 03-10-2019 |

EPO FORM P0459